# EUROPEAN PATENT SPECIFICATION

(11) **EP 2 487 835 B1**
(45) Date of publication and mention of the grant of the patent: **07.11.2018**
(21) Application number: 10829482.8
(22) Date of filing: 10.09.2010
(51) Int. Cl.: H04L 12/26, H04J 3/16, H04L 12/24

(54) **METHOD FOR TANDEM CONNECTION MONITOR LEVEL PROCESSING AND APPARATUS THEREOF**
VERFAHREN FÜR DIE TANDEMANSCHLUSS-ÜBERWACHUNGSSTUFENVERARBEITUNG UND VORRICHTUNGEN DAFÜR
PROCÉDÉ POUR LE TRAITEMENT DE NIVEAU DE SURVEILLANCE DE CONNEXION EN TANDEM ET APPAREIL ASSOCIÉ

(30) Priority: 13.11.2009 CN 200910237171
(43) Date of publication of application: 15.08.2012
(73) Proprietor: ZTE Corporation, Shenzhen, Guangdong 518057 (CN)
(72) Inventor: NIAN, Qingfei, Shenzhen Guangdong518057 (CN)
(74) Representative: J A Kemp
(86) International application number: PCT/CN2010/076790
(87) International publication number: WO 2011/057518

(56) References cited:
- EP-A1- 1 389 843
- EP-A1- 1 981 211
- EP-A1- 2 061 164
- CN-A- 101 160 812
- CN-A- 101 547 115
- US-A1- 2003 115 307

## Description

### TECHNICAL FIELD

The disclosure relates to the technology of tandem connection monitoring in an optical communication network, and in particular to a method and an apparatus for processing a tandem connection monitoring level.

### BACKGROUND

At present, an Optical Transport Network (OTN) is the trend of evolution from a transmission network to an all-optical network, and is a new-generation digital and optical transmission system specified by a series of proposals from the ITU Telecommunication Standardization Sector (ITU-T), such as G.872, G.709, G.798 and the like, in which ITU-T G.709 describes related Tandem Connection Monitoring (TCM) functions of the OTN system.

In view of frame structure and overhead of the OTN, the frame structure of the OTN is mainly divided into three layers: Optical Transform Unit (OTU), Optical Data Unit (ODU) and Optical Payload Unit (OPU) layers. In the ODU layer, six levels of TCM OverHead (OH) can be defined, including a Track Tracking Identifier (TTI) for monitoring a sublayer, a Bit Interleaved Parity with length of 8 (BIP-8), a Backward Defect Indicator (BDI), a Backward Error Indicator (BEI), a State domain (STAT) configured to identifying whether a current signal is a maintenance signal, a Backward Inserting Alignment Error (BIAE) and the like, which can perform monitoring of continuity, connectivity and signal quality.

The TCM is mainly applied in two aspects: monitoring the maintenance signal and protecting a network level of the sublayer, and the multi-level TCM is one of the characteristics of the OTN and can greatly increase monitoring capability of service segment. Specifically, the six-level TCM can be implemented by nesting, overlapping and connecting, so that any segment can achieve to be monitored when ODUk connection bridges multiple optical networks or management domains. For example, a service may bridge multiple subnetworks or operators, at this moment, the TCM can be set at a network segment of each subnetwork or a zone managed by each operator, and such TCM is separate due to a different level. This characteristic of the OTN can perform performance monitoring of each zone on one path to improve capability of managing a network.

In the prior art, the level of the TCM is generally designated by a user in a network management system, which can be implemented in the case of a network of small scale and simple networking environment. However, with increase of network scale, a problem occurs very easily in a manual designation in the case of increased network segments to be monitored and a complex relationship between the network segments to be monitored.

To solve the problem occurring in the manual designation, a method of automatically allocating TCM is further proposed in a technology, which specifically comprises: configuring a domain or a range of a domain which needs to be monitored by using TCM in a network, determining ODU services which need to be monitored by using the TCM, and automatically allocating the TCM according to a path of the ODU service and the configured domain to enable or disable the TCM of each level. However, the present method has some disadvantages as following:
1) actual service networking environment is not taken into account and not suitable for network application in the actual environment; for example, service during actual networking is generally under protection, and insertion of TCM needs to consider working service and protection service including protection route, and even preset restoration route if it is in the environment of an Automatically Switched Optical Network (ASON); and
2) the level of the TCM is calculated only according to the division of a subnetwork or a domain instead of segment point of view and analysis of a relationship between segments, resulting in decrease of management flexibility of the TCM level, incapability of generating a TCM segment according to an existing configuration, and incapability of processing the case that a division is not performed according to the domain; for example, in environment of a multilevel network management system, if a lower network management system does not divide a TCM segment according to the domain, the TCM segment cannot be automatically generated in the prior art.

US 2003/0115307A1 discloses devices and methods for processing data transmission units (DTUs) that are either entering or exiting a network.

EP 1389843A1 provides an 1:n or m:n path protection mechanism.

EP1981211A1 discloses a method for processing the tandem connection monitoring failure dependency of different levels.

### SUMMARY

In view of the above problems, the main purpose of the disclosure is to provide a method and an apparatus for processing a Tandem Connection Monitoring (TCM) level, which automatically allocates a TCM level for a TCM segment and are suitable for environment of multiple network applications.

To achieve the above purposes, the technical solution of the disclosure is realized as follows.

The disclosure provides a method for processing a TCM level, which comprises:
obtaining a route of a service which needs to be configured TCM, and obtaining TCM segments on the route of the service, wherein a TCM segment is a segment, including a start point and an end point, between two service nodes on the route of the service; and
determining a TCM segment which needs to be configured from the obtained TCM segments, and allocating a TCM level for the TCM segment which needs to be configured according to a segment relationship between the TCM segment which needs to be configured and a configured TCM segment, wherein the configured TCM segment is a TCM segment to which a TCM level is configured and the TCM segment which needs to be configured is a TCM segment to which a TCM level is not configured.

In the above solution, the step of obtaining the route of the service which needs to be configured TCM may comprise: designating a name of the service which needs to be configured TCM; and querying route information of the service according to the designated name of the service.

In the above solution, the method may further comprise: after obtaining the TCM segments on the route of the service and before determining the TCM segment which needs to be configured, automatically generating a TCM segment between an insertion point of the TCM and a monitoring point of the TCM according to a TCM configuration of existing service when a TCM segment that is not obtained exists and data with TCM configured is available.

In the above solution, the step of allocating the TCM level for the TCM segment which needs to be configured may comprise: first allocating a TCM level for a TCM segment that does not nest or overlap other segment according to an order of TCM levels, and then allocating a TCM level for a TCM segment nesting or overlapping other segment when all the other segments have been allocated TCM levels, until the TCM levels are allocated for all the TCM segments.

In the above solution, the method may further comprise: before allocating the TCM level for the TCM segment which needs to be configured, calculating an available TCM level according to the existing TCM configuration of the service;
accordingly, the step of allocating the TCM level for the TCM segment which needs to be configured may further comprise: allocating the calculated available TCM level for the TCM segment which needs to be configured.

In the above solution, the method may further comprise: after allocating the TCM level for the TCM segment which needs to be configured, recording an allocable range of each TCM segment.

In the above solution, the method may further comprise: when determining that a protection route exists, obtaining an intersection of allocable ranges of TCM levels for a TCM segment on a working route and the protection route, and adjusting the TCM level allocated for the corresponding TCM segment.

In the above solution, the route of the service may comprise a working route, a protection route, a preset restoration route. The segment relationship may comprise segment nesting, segment overlapping, segment connecting, segment isolating.

The disclosure further provides an apparatus for processing a TCM level, which comprises: a service route obtaining module, a TCM segment determining module and a TCM level allocating module, wherein
the service route obtaining module is configured to obtain a route of a service which needs to be configured TCM;
the TCM segment determining module is configured to obtain TCM segments on the route of the service and determine a TCM segment which needs to be configured from the obtained TCM segments, wherein a TCM segment is a segment, including a start point and an end point, between two service nodes on the route of the service; and
the TCM level allocating module is configured to allocate a TCM level for the TCM segment which needs to be configured according to a segment relationship between the TCM segment which needs to be configured and a configured TCM segment, wherein the configured TCM segment is a TCM segment to which a TCM level is configured and the TCM segment which needs to be configured is a TCM segment to which a TCM level is not configured.

In the above solution, the apparatus may further comprise: a storing module configured to record an allocable range of each TCM segment.

In the above solution, the apparatus may further comprise: a judging module configured to judge whether all routes are processed and determine whether a protection route exists.

In the above solution, the apparatus may further comprise: a TCM level adjusting module configured to adjust an allocable range of the TCM level of the corresponding TCM segment according to an intersection of an allocable range of a TCM level of a working route and an allocable range of a TCM level of a protection route when the service has the working route and the protection route.

The method and the apparatus for processing a TCM level provided by the disclosure obtain a route of service needing to be configured TCM, obtain a TCM segment on the route of the service, determine a TCM segment needing to be configured from the obtained TCM segment, and allocate a TCM level for the TCM segment needing to be configured according to a segment relationship between the TCM segment needing to be configured and a configured TCM segment. In this way, both an allocation of a TCM level for a designated TCM segment and an allocation of TCM levels for all TCM segments can be implemented.

The method of the disclosure can process an allocation of a TCM level for service having a protection route or a preset restoration route without configuring a subnetwork or a TCM configuration domain, so that the disclosure is applicable to an application of various actual networking environments, and has stronger adaptability and wider application range.

When performing TCM, the disclosure can determine a TCM segment needing to be configured according to a route of service and automatically obtain a TCM level of the TCM segment needing to be configured according to a segment relationship between the TCM segment needing to be configured and a configured TCM segment, so that difficulty of network maintenance can be reduced and occurrence of failure can be decreased in the case of complex networking or complex segment relationship of TCM.

### BRIEF DESCRIPTION OF THE DRAWINGS

Fig. 1 is a schematic diagram showing a relationship among various TCM segments in service according to one embodiment of the disclosure;
Fig. 2 is a schematic flowchart showing an implementation of a method for processing a TCM level according to the disclosure;
Fig. 3 is a schematic flowchart showing an implementation of a method for processing a TCM level according to an embodiment of the disclosure;
Fig. 4 is a schematic diagram showing a principle of implementing TCM level management without service protection according to the disclosure; and
Fig. 5 is a schematic diagram showing a principle of implementing TCM level management with service protection according to the disclosure.

### DETAILED DESCRIPTION

The basic idea of the disclosure is: obtaining a route of a service which needs to be configured TCM, and obtaining a TCM segment on the route of the service; determining a TCM segment which needs to be configured from the obtained TCM segment, and allocating a TCM level for the TCM segment which needs to be configured according to a segment relationship between the TCM segment which needs to be configured and a configured TCM segment.

Here, the route of the service comprises a working route and a protection route, and further comprises a preset restoration route when applied in an ASON.

The TCM segment refers to a segment monitored by the TCM, including a start point and an end point, between two service nodes in the service which needs to be configured the TCM. The configured TCM segment is a TCM segment to which a TCM level is configured, which comprises a start point identifier, an end point identifier, information of the configured TCM level, and information of overhead; and the TCM segment which needs to be configured is a TCM segment to which a TCM level is not configured, which only comprises a start point identifier of the TCM segment and an end point identifier of the TCM segment.

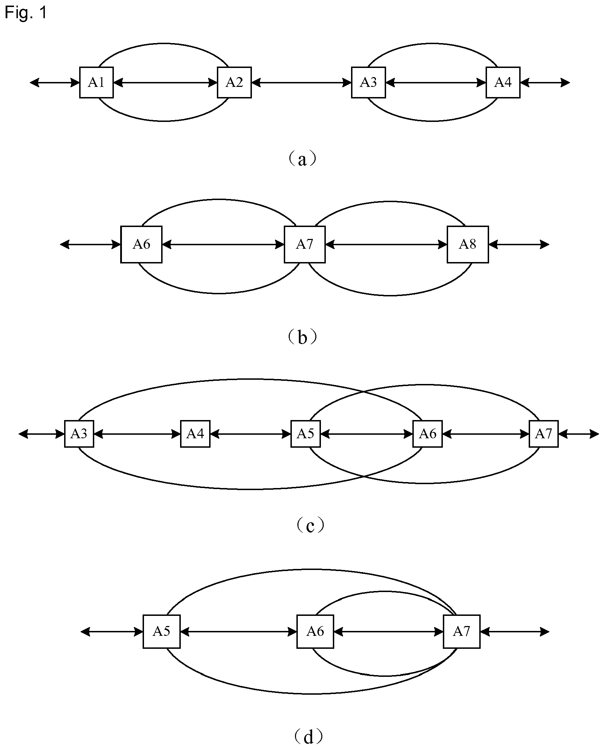

The segment relationship between the TCM segments comprises four types: segment nesting, segment overlapping, segment connecting and segment isolating, as shown in Fig. 1 (a) to Fig. 1 (d); wherein
the segment isolating refers to that the terminal points of two segments are independent respectively, as shown in Fig. 1 (a), the terminal points of a segment A1:A2 and the terminal points of a segment A3:A4 are independent respectively;
the segment connecting refers to that a shared terminal point exists and a nesting relationship does not exist between two segments, as shown in Fig. 1 (b), a segment A6:A7 and a segment A7:A8 share a terminal point A7 and has not a nesting relationship;
the segment overlapping refers to that, in two segments, one of the start point or the end point of one segment is nested by the other segment, and an intersection exists between the segments, at this moment, according to a service direction, a previous segment overlaps a next segment, where the previous segment is called an overlapped segment and the next segment is called an overlapping segment; as shown in Fig. 1 (c), an intersection exists between a segment A3:A6 and a segment A5:A7, resulting in segment overlapping, wherein the segment A3:A6 is called the overlapped segment and the segment A5:A7 is called the overlapping segment; and
the segment nesting refers to that, in two segments, both the start point and the end point of one segment are nested in the other segment, at this moment, according to the service direction, a previous segment is called as nested by a next segment; as shown in Fig. 1 (d), a segment A5:A7 nests a segment A6:A7, wherein the segment A6:A7 is called a nested segment and the segment A5:A7 is called a nesting segment.

Generally, the segment connecting and the segment isolating do not affect a allocation of a TCM level; and a segment may have many segment relationships, and segment relationships thereof affecting the TCM level should be allocated completely.

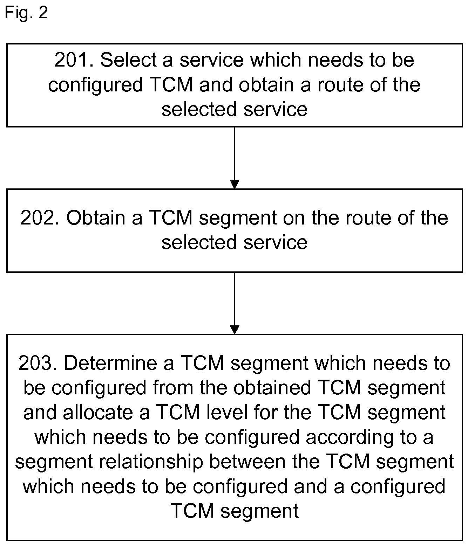

A method for processing a TCM level of the disclosure is shown in Fig. 2, which comprises the following steps.

Step 201: selecting a service which needs to be configured TCM, and obtaining a route of the selected service.

Here, the step of selecting the service is designating a name of the service which needs to be configured TCM; and the step of obtaining the route of the service refers to: querying route information of the service which comprises information of a service node through which the service pass according to the designated name of the service, and determining a segment relationship between TCM segments with assistance of the route information of the service after obtaining the route information of the service, wherein the terminal points of the TCM segments definitely belong to the nodes through which the service pass, i.e., the route of the service.

Step 202: obtaining a TCM segment on the route of the selected service, and if a TCM segment that is not obtained exists and data with TCM configured is available, automatically generating a TCM segment between an insertion point of TCM and a monitoring point of TCM according to TCM configuration of existing service.

Here, the step of obtaining the TCM segment can refer to: obtaining all the existing TCM segments on the route of the service, or obtaining a designated TCM segment, and the configured TCM segment can be obtained from an existing system. For example, a Network Management System (NMS) can obtain a TCM segment configured by an Element Management System (EMS) from the EMS.

The existing service is a subnetwork connection; and the step of generating the TCM segment refers to: in an environment of a multilevel network management system, a lower network management system does not divide a TCM segment according to domain, and an upper network management system automatically generates a TCM segment according to a TCM insertion point and a TCM level; generally, a TCM insertion point and a monitoring point are paired and on a route of service, additionally using a TCM level and TCM overhead, so that a TCM segments can be generated automatically, and how to generate the TCM segment in detail is the prior art, which is not further described in detail here.

Step 203: determining a TCM segment which needs to be configured from the obtained TCM segment, and allocating a TCM level for the TCM segment which needs to be configured according to a segment relationship between the TCM segment which needs to be configured and the configured TCM segment.

Here, the determination of the TCM segment which needs to be configured can refer to: designating one or more TCM segment(s) to which a TCM level is not configured; the segment relationship comprises segment connecting, segment isolating, segment nesting and segment overlapping; and the TCM level is usually allocated from small to large or from large to small.

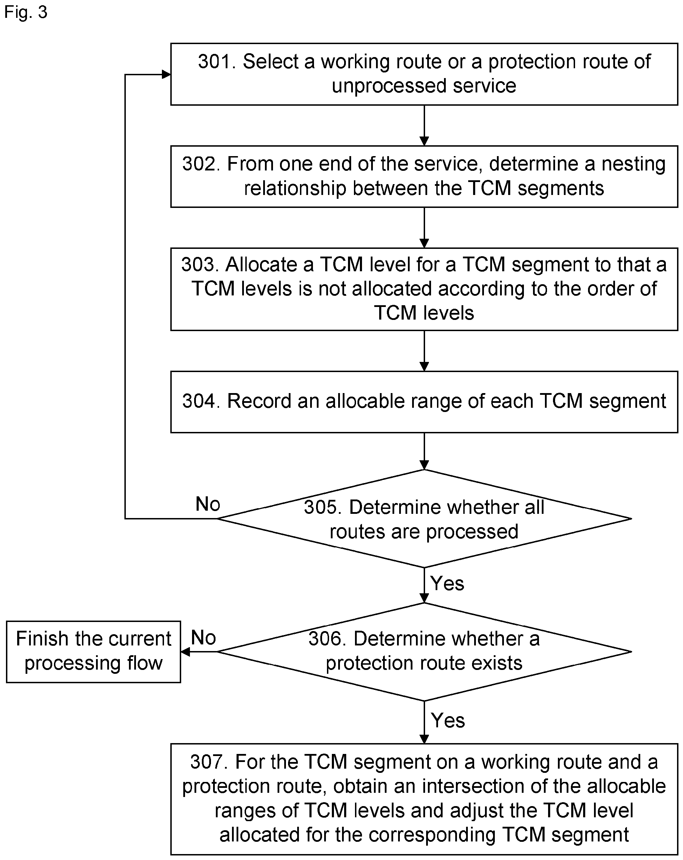

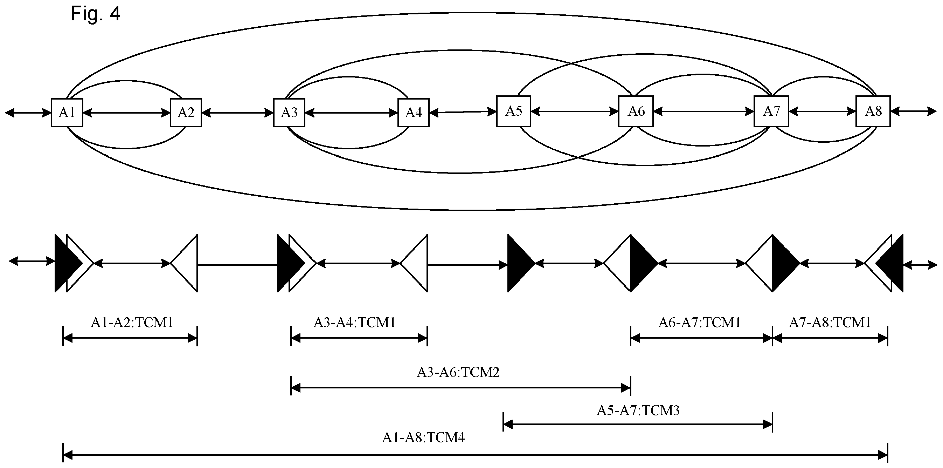

The process of the method for processing a TCM level will be described with reference to Fig. 3 and Fig. 4 hereinafter, and, in this embodiment, it is assumed that all TCM segments need to be configured.

Step 301: selecting a working route or a protection route of an unprocessed service.

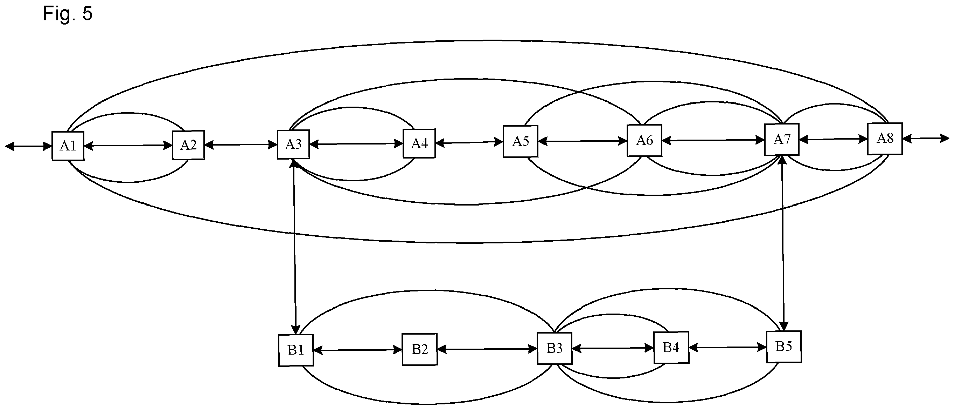

Here, the step of selecting the route refers to: selecting the whole route of one service, and as shown in Fig. 4, the route of the service comprises eight service nodes: A1, A2, A3, A4, A5, A6, A7 and A8; the working route of the service is: A1↔A2↔A3↔A4↔A5↔A6↔A7↔A8; and when the protection route is selected, it means that the selection is from the start point of the service to the end point of the service and through one segment of the protection route between them, and as shown in the Fig. 5, the protection route of the selected service is: A1↔A2↔A3↔B1↔B2↔B3↔B4↔B5↔A7↔A8.

Step 302: from one end of the service, determining a nesting relationship between the TCM segments.

In the embodiment, the nesting relationship is determined in the direction from the start point to the end point, so that the determination is started from the start point. Usually, a segment relationship between TCM segments is related to a service direction, and a different service direction causes a different segment relationship of the TCM segments based on unidirection. Information of other segments of segment nesting or segment overlapping is organized to segment information as a list of information of nesting segment or overlapping segment of the TCM segments.

Step 303: allocating a TCM level for a TCM segment to that a TCM level is not allocated according to the order of TCM levels.

Here, the step of allocating the TCM level usually comprises: first allocating a level for a TCM segment that does not nest or overlap other segment, and then allocating a level for a TCM segment nesting or overlapping other segment when all the other segments have been allocated TCM levels, until the TCM levels are allocated for all the TCM segments.

The order of the TCM levels can be either from small to large or from large to small. For a TCM segment nesting or overlapping other segment, the allocated TCM level should be less or greater than all TCM segments nested or overlapped by the TCM segment.

In the step, when the TCM level cannot be allocated, the current processing flow is finished.

Taking Fig. 4 as an example, a segment relationship between TCM segments in Fig. 4 is specifically shown in table 1:

**Table 1**

| TCM segment | Nesting segment | Segment relationship |
|---|---|---|
| A1:A2 | None | Segment isolating |
| A3:A4 | None | Segment isolating |
| A6:A7 | None | Segment connecting |
| A7:A8 | None | Segment connecting |
| A3:A6 | A3:A4 | Segment nesting |
| A5:A7 | A6:A7 | Segment nesting |
| | A3:A6 | Segment overlapping |
| A1:A8 | A1:A2 | Segment nesting |
| | A3:A4 | Segment nesting |
| | A6:A7 | Segment nesting |
| | A7:A8 | Segment nesting |
| | A3:A6 | Segment nesting |
| | A5:A7 | Segment nesting |

In the direction from the start point of the service to the end point of the service, a TCM level is allocated for a TCM segment that is not allocated a TCM level in the direction from A1 to A8 in this embodiment. This is a cycle operation, and an object allocated each time is a TCM segment with the segment relationship of segment isolating or segment connecting, or is a TCM segment nesting or overlapping other segment when the other segment is allocated a TCM level. TCM segments that are not nested or overlapped, i.e., those with the segment relationship of segment isolating or segment connecting, such as A1:A2, A3:A4, A6:A7 and A7:A8, are found at first. In this embodiment, it is assumed that the TCM levels are allocated from small to large.

The result after the first processing is listed in table 2:

**Table 2**

| TCM segment | Nesting segment | Segment relationship | TCM level |
|---|---|---|---|
| A1:A2 | None | Segment isolating | 1 |
| A3:A4 | None | Segment isolating | 1 |
| A6:A7 | None | Segment connecting | 1 |
| A7:A8 | None | Segment connecting | 1 |
| A3:A6 | A3:A4 | Segment nesting | Not allocated |
| A5:A7 | A6:A7 | Segment nesting | Not allocated |
| | A3:A6 | Segment overlapping | |
| A1:A8 | A1:A2 | Segment nesting | Not allocated |
| | A3:A4 | Segment nesting | |
| | A6:A7 | Segment nesting | |
| | A7:A8 | Segment nesting | |
| | A3:A6 | Segment nesting | |
| | A5:A7 | Segment nesting | |

After the TCM segments that are not nested or overlapped are allocated, TCM segments nesting or overlapping other segment when the other segment is allocated a TCM level are found, such as A3:A6 and A5:A7. Since a TCM level has been allocated for a TCM segment A3:A4 nested by A3:A6, and the TCM level is 1, the TCM level of A3:A6 must be greater than 1; likewise, TCM levels have been allocated for the TCM segment A6:A7 nested by A5:A7 and the TCM segment A3:A6 overlapped by A5:A7, and the TCM levels are 1 and 2 respectively, so that the TCM level of A5:A7 must be greater than 2.

The result after the second processing is listed in table 3:

**Table 3**

| TCM segment | Nesting segment | Segment relationship | TCM level |
|---|---|---|---|
| A1:A2 | None | Segment isolating | 1 |
| A3:A4 | None | Segment isolating | 1 |
| A6:A7 | None | Segment connecting | 1 |
| A7:A8 | None | Segment connecting | 1 |
| A3:A6 | A3:A4 | Segment nesting | 2 |
| A5:A7 | A6:A7 | Segment nesting | 3 |
| | A3:A6 | Segment overlapping | |
| A1:A8 | A1:A2 | Segment nesting | Not allocated |
| | A3:A4 | Segment nesting | |
| | A6:A7 | Segment nesting | |
| | A7:A8 | Segment nesting | |
| | A3:A6 | Segment nesting | |
| | A5:A7 | Segment nesting | |

After the allocation continues to be performed according to the same principle, the result after the third processing is listed in table 4:

**Table 4**

| TCM segment | Nesting segment | Segment relationship | TCM level |
|---|---|---|---|
| A1:A2 | None | Segment isolating | 1 |
| A3:A4 | None | Segment isolating | 1 |
| A6:A7 | None | Segment connecting | 1 |
| A7:A8 | None | Segment connecting | 1 |
| A3:A6 | A3:A4 | Segment nesting | 2 |
| A5:A7 | A6:A7 | Segment nesting | 3 |
| | A3:A6 | Segment overlapping | |
| A1:A8 | A1:A2 | Segment nesting | 4 |
| | A3:A4 | Segment nesting | |
| | A6:A7 | Segment nesting | |
| | A7:A8 | Segment nesting | |
| | A3:A6 | Segment nesting | |
| | A5:A7 | Segment nesting | |

In the embodiment, it is assumed that all the TCM segments need to be configured, that is, no TCM level is used, and in an actual application, if another TCM level is been allocated before one TCM level is allocated for a TCM segment which needs to be configured, before step 303, the method further comprises: calculating an available TCM level according to an existing TCM configuration of the service; accordingly, the step of allocating the TCM level for the TCM segment which needs to be configured specifically comprises: allocating the calculated available TCM level for the TCM segment which needs to be configured. For example, the calculated available TCM levels are 3 to 6 according to the existing TCM configuration of the service, and then the TCM levels allocated for the TCM segments which need to be configured are in the range of 3 to 6, wherein the service can be a subnetwork connection.

Step 304: recording an allocable range of each TCM segment;
here, the allocable range refers to the TCM level currently allocated for the current TCM segment to 6. For example, the allocable range of A1:A2, A3:A4, A6:A7 and A7:A8 is 1 to 6; the allocable range of A3:A6 is 2 to 6; the allocable range of A5:A7 is 3 to 6; and the allocable range of A1:A8 is 4 to 6.

Step 305: determining whether all the routes are processed, if yes, executing step 306; otherwise, executing step 301;
when the protection route is processed, the allocable range available thereof is only recorded for a TCM segment to which a TCM level is allocated.

Step 306: determining whether the protection route exists, if yes, executing step 307; otherwise, finishing the current processing flow;
here, the protection route is identified by route information of service.

Step 307: for the TCM segment which is in a working route and a protection route, obtaining the intersection of the allocable ranges of TCM levels, and adjusting the TCM level allocated for the corresponding TCM segment.

In combination with Fig. 4 and Fig. 5, a segment A1:A8 has a working route and a protection route, but the allocable range of the working route and that of the protection route are different. In the working route, the allocable range of the TCM segment A1:A8 is 4 to 6; and in the protection route, the allocable range of TCM segment A1:A8 is 3 to 6; then, the intersection of both is obtained, and the allocable range is finally adjusted to: 4 to 6.

Service with reference to Fig. 4 is two-way service, but an actual allocation of TCM levels is processed in one-way mode. It is processed from one direction first, and then it is processed from the other direction. A segment relationship between TCM segments is obtained from A1, and for the relationship of segment overlapping, the TCM segment whose start point is located ahead is overlapped, and the other TCM segment overlaps other segment; for example, A5:A7 overlaps A3:A6.

Fig. 5 is a schematic diagram showing the principle of implementing TCM segments when service is protected in the disclosure, as shown in Fig. 5, service has a protection route from B1 to B5 between service nodes A3 and A7. Due to the presence of B1 to B5, when the service is switched, the actual TCM route is a service route through B1 to B5; since TCM segment A1:A8 is over B1 to B5, an allocation of TCM levels of the TCM segment A1:A8 needs still to take an allocation of TCM levels within the route from B1 to B5 into account, and the intersection of the allocation ranges of TCM levels of the working route and protection route is taken.

Taking Fig. 5 as an example, a segment relationship between TCM segments in Fig. 5 is specifically shown in table 5, which comprises TCM segments on the working route and the protection route:

**Table 5**

| TCM segment | Nesting segment | Segment relationship |
|---|---|---|
| A1:A2 | None | Segment isolating |
| A3:A4 | None | Segment isolating |
| A6:A7 | None | Segment connecting |
| A7:A8 | None | Segment connecting |
| A3:A6 | A3:A4 | Segment nesting |
| A5:A7 | A6:A7 | Segment nesting |
| | A3:A6 | Segment overlapping |
| B1:B3 | None | Segment connecting |
| B3:B4 | None | Segment connecting |
| B3:B5 | B3:B4 | Segment nesting |
| A1:A8 | A1:A2 | Segment nesting |
| | A3:A4 | Segment nesting |
| | A6:A7 | Segment nesting |
| | A7:A8 | Segment nesting |
| | A3:A6 | Segment nesting |
| | A5:A7 | Segment nesting |
| | B1:B3 | Segment nesting |
| | B3:B4 | Segment nesting |
| | B3:B5 | Segment nesting |

When the service is switched, the actual TCM route is the protection route through B1 to B5, and the segment relationship between all TCM segments on the protection route is listed in table 6:

**Table 6**

| TCM segment | Nesting segment | Segment relationship |
|---|---|---|
| A1:A2 | None | Segment isolating |
| B1:B3 | None | Segment connecting |
| B3:B4 | None | Segment connecting |
| B3:B5 | B3:B4 | Segment nesting |
| A7:A8 | None | Segment connecting |
| A1:A8 | A1:A2 | Segment nesting |
| | B1:B3 | Segment nesting |
| | B3:B4 | Segment nesting |
| | B3:B5 | Segment nesting |
| | A7:A8 | Segment nesting |

The result after the first processing is listed in table 7:

**Table 7**

| TCM segment | Nesting segment | Segment relationship | TCM level |
|---|---|---|---|
| A1:A2 | None | Segment isolating | 1 (unchanged, not related to a protection link) |
| B1:B3 | None | Segment connecting | 1 |
| B3:B4 | None | Segment nesting | 1 |
| B3:B5 | B3:B4 | Segment nesting | Not allocated |
| A7:A8 | None | Segment connecting | 1 (unchanged, not related to the protection link) |
| A1:A8 | A1:A2 | 1 | Not allocated |
| | B1:B3 | 1 | |
| | B3:B4 | 1 | |
| | B3:B5 | Not allocated | |
| | A7:A8 | 1 | |

The result after the second processing is listed in table 8:

**Table 8**

| TCM segment | Nesting segment | Segment relationship | TCM level |
|---|---|---|---|
| A1:A2 | None | Segment isolating | 1 (unchanged, not related to the protection link) |
| B1:B3 | None | Segment connecting | 1 |
| B3:B4 | None | Segment nesting | 1 |
| B3:B5 | B3:B4 | Segment nesting | 2 |
| A7:A8 | None | Segment connecting | 1 (unchanged, not related to the protection link) |
| A1:A8 | A1:A2 | 1 | Not allocated |
| | B1:B3 | 1 | |
| | B3:B4 | 1 | |
| | B3:B5 | Not allocated | |
| | A7:A8 | 1 | |

The result after the third processing is listed in table 9:

**Table 9**

| TCM segment | Nesting segment | Segment relationship | TCM level |
|---|---|---|---|
| A1:A2 | None | Segment isolating | 1 (unchanged, not related to the protection link) |
| B1:B3 | None | Segment connecting | 1 |
| B3:B4 | None | Segment nesting | 1 |
| B3:B5 | B3:B4 | Segment nesting | 2 |
| A7:A8 | None | Segment connecting | 1 (unchanged, not related to the protection link) |
| A1:A8 | A1:A2 | 1 | 3 |
| | B1:B3 | 1 | |
| | B3:B4 | 1 | |
| | B3:B5 | 2 | |
| | A7:A8 | 1 | |

When a TCM level is allocated in the case of a protection route, only the TCM level of the TCM segment, for example, A1:A8, of the working route affected by an insertion TCM level of the protection route is adjusted. In combination with two cases that a protection route exists and the protection route does not exist, the configurable TCM level of the TCM segment A1:A8 over the protection route is 4, and the allocable range thereof is 4 to 6.

To implement the above method, the disclosure further provides an apparatus for processing a TCM level, which comprises: a service route obtaining module, a TCM segment determining module and a TCM level allocating module, wherein
the service route obtaining module is configured to obtain a route of a service which needs to be configured TCM;
the TCM segment determining module is configured to obtain a TCM segment on the route of the service and determine a TCM segment which needs to be configured from the obtained TCM segment; and
the TCM level allocating module is configured to allocate a TCM level for the TCM segment which needs to be configured according to a segment relationship between the TCM segment which needs to be configured and a configured TCM segment.

Here, the route of the service comprises a working route and a protection route, and further comprises a preset restoration route when applied in an ASON; the segment relationship comprises: segment nesting, segment overlapping, segment connecting and segment isolating; and the TCM levels are from small to large or from large to small.

Furthermore, the apparatus further comprises a storing module configured to record an allocable range of each TCM segment.

Furthermore, the apparatus further comprises a judging module configured to judge whether all routes are processed and determine whether a protection route exists; accordingly, the TCM level allocating module allocates a TCM level of a TCM segment which needs to be configured on the working route when the protection route does not exist, and allocates TCM levels of TCM segments which need to be configured on the working route and the protection route when the protection route exists.

Furthermore, the apparatus further comprises a TCM level adjusting module configured to adjust an allocable range of the TCM level of the corresponding TCM segment according to an intersection of an allocation range of a TCM level of a working route and an allocable range of a TCM level of the protection route when service has the working route and the protection route.

The above are only preferred embodiments of the disclosure and not intended to limit the scope of protection of the disclosure, and any modification, equivalent replacement, improvement and the like within the spirit and principle of the disclosure shall fall within the scope of protection of the disclosure.

## Claims

1. A method for processing a Tandem Connection Monitoring, TCM, level, **characterized by** comprising:
obtaining (S201) a route of a service which needs to be configured TCM, and obtaining (S202) TCM segments on the route of the service, wherein a TCM segment is a segment, including a start point and an end point, between two service nodes on the route of the service; and
determining (S203) a TCM segment which needs to be configured from the obtained TCM segments, and allocating (S203) a TCM level for the TCM segment which needs to be configured according to a segment relationship between the TCM segment which needs to be configured and a configured TCM segment, wherein the configured TCM segment is a TCM segment to which a TCM level is configured and the TCM segment which needs to be configured is a TCM segment to which a TCM level is not configured.

2. The method according to claim 1, wherein the step of obtaining the route of the service which needs to be configured TCM comprises: designating a name of the service which needs to be configured TCM; and querying route information of the service according to the designated name of the service.

3. The method according to claim 1, further comprising: after obtaining the TCM segments on the route of the service and before determining the TCM segment which needs to be configured, automatically generating a TCM segment between an insertion point of the TCM and a monitoring point of the TCM according to a TCM configuration of existing service when a TCM segment that is not obtained exists and data with TCM configured is available.

4. The method according to claim 1, 2 or 3, wherein the step of allocating the TCM level for the TCM segment which needs to be configured comprises: first allocating a TCM level for a TCM segment that does not nest or overlap other segment according to an order of TCM levels, and then allocating a TCM level for a TCM segment nesting or overlapping other segment when all the other segments have been allocated TCM levels, until the TCM levels are allocated for all the TCM segments.

5. The method according to claim 4, further comprising: before allocating the TCM level for the TCM segment which needs to be configured, calculating an available TCM level according to the existing TCM configuration of the service;
accordingly, the step of allocating the TCM level for the TCM segment which needs to be configured further comprises: allocating the calculated available TCM level for the TCM segment which needs to be configured.

6. The method according to claim 4, further comprising: after allocating the TCM level for the TCM segment which needs to be configured, recording an allocable range of each TCM segment.

7. The method according to claim 4, further comprising: when determining that a protection route exists, obtaining an intersection of allocable ranges of TCM levels for a TCM segment on a working route and the protection route, and adjusting the TCM level allocated for the corresponding TCM segment.

8. The method according to claim 1, wherein the route of the service comprises a working route, a protection route, a preset restoration route.

9. The method according to claim 1, wherein the segment relationship comprises segment nesting, segment overlapping, segment connecting, segment isolating.

10. An apparatus for processing a Tandem Connection Monitoring, TCM, level, **characterized by** comprising: a service route obtaining module, a TCM segment determining module and a TCM level allocating module, wherein
the service route obtaining module is configured to obtain a route of a service which needs to be configured TCM;
the TCM segment determining module is configured to obtain TCM segments on the route of the service and determine a TCM segment which needs to be configured from the obtained TCM segments, wherein a TCM segment is a segment, including a start point and an end point, between two service nodes on the route of the service; and
the TCM level allocating module is configured to allocate a TCM level for the TCM segment which needs to be configured according to a segment relationship between the TCM segment which needs to be configured and a configured TCM segment, wherein the configured TCM segment is a TCM segment to which a TCM level is configured and the TCM segment which needs to be configured is a TCM segment to which a TCM level is not configured.

11. The apparatus according to claim 10, further comprising: a storing module configured to record an allocable range of each TCM segment.

12. The apparatus according to claim 10, further comprising: a judging module configured to judge whether all routes are processed and determine whether a protection route exists.

13. The apparatus according to claim 10, 11 or 12, further comprising: a TCM level adjusting module configured to adjust an allocable range of the TCM level of the corresponding TCM segment according to an intersection of an allocable range of a TCM level of a working route and an allocable range of a TCM level of a protection route when the service has the working route and the protection route.

14. The apparatus according to claim 10, wherein the route of the service comprises a working route, a protection route, a preset restoration route.

15. The apparatus according to claim 10, wherein the segment relationship comprises segment nesting, segment overlapping, segment connecting, segment isolating.

## Patentansprüche

1. Verfahren zum Verarbeiten einer Tandem-Connection-Monitoring, TCM,-Ebene, **dadurch gekennzeichnet, dass** sie Folgendes umfasst:
Erhalten (S201) eines Leitwegs eines Dienstes, der konfigurierte TCM werden muss, und Erhalten (S202) von TCM-Segmenten auf dem Leitweg des Dienstes, wobei ein TCM-Segment ein Segment, das einen Startpunkt und einen Endpunkt beinhaltet, zwischen zwei Dienstknoten auf dem Leitweg des Dienstes ist; und
Bestimmen (S203) eines TCM-Segments, das aus den erhaltenen TCM-Segmenten konfiguriert werden muss, und Zuordnen (S203) einer TCM-Ebene für das TCM-Segment, das gemäß einer Segmentbeziehung zwischen dem TCM-Segment, das konfiguriert werden muss, und einem konfigurierten TCM-Segment konfiguriert werden muss, , wobei das konfigurierte TCM-Segment ein TCM-Segment ist, für das eine TCM-Ebene konfiguriert ist, und das TCM-Segment, das konfiguriert werden muss, ein TCM-Segment ist, für das keine TCM-Ebene konfiguriert ist.

2. Verfahren nach Anspruch 1, wobei der Schritt des Erhaltens des Leitwegs des Dienstes, der konfigurierte TCM werden muss, Folgendes umfasst: Bestimmen eines Namens des Dienstes, der konfigurierte TCM werden muss; und Abfragen von Leitweginformationen des Dienstes gemäß dem bestimmten Namen des Dienstes.

3. Verfahren nach Anspruch 1, ferner umfassend: nach dem Erhalten der TCM-Segmente auf dem Leitweg des Dienstes und vor dem Bestimmen des TCM-Segments, das konfiguriert werden muss, automatisches Erzeugen eines TCM-Segments zwischen einem Einfügepunkt der TCM und einem Überwachungspunkt der TCM gemäß einer TCM-Konfiguration eines bestehenden Dienstes, wenn ein TCM-Segment, das nicht erhalten ist, existiert und Daten mit konfigurierter TCM verfügbar sind.

4. Verfahren nach Anspruch 1, 2 oder 3, wobei der Schritt des Zuordnens der TCM-Ebene für das TCM-Segment, das konfiguriert werden muss, Folgendes umfasst: zuerst Zuordnen einer TCM-Ebene für ein TCM-Segment, das gemäß einer Reihenfolge von TCM-Ebenen nicht verschachtelt ist oder ein anderes Segment überlagert, und dann Zuordnen einer TCM-Ebene für ein TCM-Segment, das verschachtelt ist oder ein anderes Segment überlagert, wenn allen anderen Segmenten TCM-Ebenen zugeordnet wurden, bis die TCM-Ebenen für alle TCM-Segmente zugeordnet sind.

5. Verfahren nach Anspruch 4, ferner umfassend: vor dem Zuordnen der TCM-Ebene für das TCM Segment, das konfiguriert werden muss, Berechnen einer verfügbaren TCM-Ebene gemäß der bestehenden TCM-Konfiguration des Dienstes;
dementsprechend umfasst der Schritt des Zuordnens der TCM-Ebene für das TCM-Segment, das konfiguriert werden muss, ferner Folgendes: Zuordnen der berechneten verfügbaren TCM-Ebene für das TCM-Segment, das konfiguriert werden muss.

6. Verfahren nach Anspruch 4, ferner umfassend: nach dem Zuordnen der TCM-Ebene für das TCM-Segment, das konfiguriert werden muss, Aufzeichnen eines zuteilbaren Bereichs jedes TCM-Segments.

7. Verfahren nach Anspruch 4, ferner umfassend: bei dem Bestimmen, dass ein Schutzleitweg existiert, Erhalten einer Überschneidung der zuteilbaren Bereiche der TCM-Ebenen für ein TCM-Segment auf einem Bearbeitungsleitweg und dem Schutzleitweg, und Einstellen der TCM-Ebene für das entsprechende TCM-Segment.

8. Verfahren nach Anspruch 1, wobei der Leitweg des Dienstes einen Bearbeitungsleitweg, einen Schutzleitweg, einen voreingestellten Wiederherstellungsleitweg umfasst.

9. Verfahren nach Anspruch 1, wobei die Segmentbeziehung eine Segmentverschachtelung, eine Segmentüberlappung, eine Segmentverbindung, eine Segmentisolation umfasst.

10. Vorrichtung zum Verarbeiten einer Tandem Connection Monitoring, TCM,-Ebene, **dadurch gekennzeichnet, dass** sie Folgendes umfasst: ein Dienstleitwegerhaltungsmodul, ein TCM-Segment-Bestimmungsmodul und ein TCM-Ebenen-Zuordnungsmodul, wobei
das Dienstleitwegerhaltungsmodul konfiguriert ist, einen Leitweg eines Dienstes zu erhalten, der konfigurierte TCM werden muss:
das TCM-Segment-Bestimmungsmodul konfiguriert ist, das TCM-Segment auf dem Leitweg des Dienstes zu erhalten und ein TCM-Segment zu bestimmen, das aus den erhaltenen TCM-Segmenten konfiguriert werden muss, wobei ein TCM-Segment ein Segment, das einen Startpunkt und einen Endpunkt beinhaltet, zwischen zwei Dienstknoten auf dem Leitweg des Dienstes ist; und
das TCM-Ebenen-Zuordnungsmodul konfiguriert ist, die TCM-Ebene für das TCM-Segment zuzuordnen, das gemäß einer Segmentbeziehung zwischen dem TCM-Segment, das konfiguriert werden muss, und einem konfigurierten TCM-Segment konfiguriert werden muss, wobei das konfigurierte TCM-Segment ein TCM-Segment ist, für das eine TCM-Ebene konfiguriert ist, und das TCM-Segment, das konfiguriert werden muss, ein TCM-Segment ist, für das eine TCM-Ebene nicht konfiguriert ist.

11. Vorrichtung nach Anspruch 10, ferner umfassend: ein Speichermodul, das konfiguriert ist, einen zuteilbaren Bereich jedes TCM-Segments aufzuzeichnen.

12. Vorrichtung nach Anspruch 10, ferner umfassend: ein Bewertungsmodul, das konfiguriert ist zu beurteilen, ob alle Leitwege verarbeitet sind, und zu bestimmen, ob ein Schutzleitweg existiert.

13. Vorrichtung nach Anspruch 10, 11 oder 12, ferner umfassend: ein TCM-Ebenen-Einstellmodul, das konfiguriert ist, einen zuteilbaren Bereich der TCM-Ebene des entsprechenden TCM-Segments gemäß einer Überschneidung eines zuteilbaren Bereichs einer TCM-Ebene eines Bearbeitungsleitwegs und eines zuteilbaren Bereichs einer TCM-Ebene eines Schutzleitwegs einzustellen, wenn der Dienst den Bearbeitungsleitweg und den Schutzleitweg beinhaltet.

14. Vorrichtung nach Anspruch 10, wobei der Leitweg des Dienstes einen Bearbeitungsleitweg, einen Schutzleitweg, einen voreingestellten Wiederherstellungsleitweg umfasst.

15. Vorrichtung nach Anspruch 10, wobei die Segmentbeziehung eine Segmentverschachtelung, eine Segmentüberlagerung, eine Segmentverbindung, eine Segmentisolation umfasst.

## Revendications

1. Procédé de traitement d'un niveau de contrôle de connexion en tandem, TCM, **caractérisé en ce qu'**il comprend ;
l'obtention (S201) de l'itinéraire d'un service qui doit être TCM configuré, et l'obtention (S202) de segments de TCM sur l'itinéraire du service, un segment de TCM étant un segment, comprenant un point de départ et un point terminal, entre deux noeuds de service sur l'itinéraire du service ; et
la détermination (S203) d'un segment de TCM qui doit être configuré à partir des segments de TCM obtenus, et l'attribution (S203) d'un niveau de TCM au segment de TCM qui doit être configuré en fonction d'un rapport de segment entre le segment de TCM qui doit être configuré et un segment de TCM configuré, le segment de TCM configuré étant un segment de TCM pour lequel un niveau de TCM est configuré et le segment de TCM qui doit être configuré est un segment de TCM pour lequel un niveau de TCM n'est pas configuré.

2. Procédé selon la revendication 1, dans lequel l'étape d'obtention de l'itinéraire du service qui doit être TCM configuré comprend : la désignation d'un nom du service qui doit être TCM configuré ; et la demande d'informations sur l'itinéraire du service en fonction du nom d'appellation du service.

3. Procédé selon la revendication 1, comprenant en outre : après l'obtention des segments de TCM sur l'itinéraire du service et avant la détermination du segment de TCM qui doit être configuré, la génération automatique d'un segment de TCM entre un point d'insertion du TCM et un point de contrôle du TCM en fonction d'une configuration de TCM d'un service existant lorsqu'un segment de TCM qui n'est pas obtenu existe et des données avec un TCM configuré sont disponibles.

4. Procédé selon la revendication 1, 2 ou 3, dans lequel l'étape d'attribution du niveau de TCM au segment de TCM qui doit être configuré comprend : d'abord l'attribution d'un niveau de TCM à un segment de TCM qui ne s'imbrique pas dans un autre segment et ne chevauche pas un autre segment en fonction d'un ordre de niveaux de TCM, et puis l'attribution d'un niveau de TCM à un segment de TCM s'imbriquant dans un autre segment ou chevauchant un autre segment lorsque tous les autres segments ont reçu l'attribution de niveaux de TCM, jusqu'à ce que les niveaux de TCM soient attribués à tous les segments de TCM.

5. Procédé selon la revendication 4, comprenant en outre : avant l'attribution du niveau de TCM au segment de TCM qui doit être configuré, le calcul d'un niveau de TCM accessible en fonction de la configuration de TCM existante du service ;
par conséquent, l'étape d'attribution du niveau de TCM au segment de TCM qui doit être configuré comprenant en outre : l'attribution du niveau de TCM accessible calculé au segment de TCM qui doit être configuré.

6. Procédé selon la revendication 4, comprenant en outre : avant l'attribution du niveau de TCM au segment de TCM qui doit être configuré, l'enregistrement d'une plage attribuable de chaque segment de TCM.

7. Procédé selon la revendication 4, comprenant en outre : lors de la détermination qu'un itinéraire de protection existe, l'obtention d'une intersection de plages attribuables de niveaux de TCM à un segment de TCM sur un trajet d'usinage et l'itinéraire de protection, et l'ajustement du niveau de TCM attribué au segment de TCM correspondant.

8. Procédé selon la revendication 1, dans lequel l'itinéraire du service comprend un trajet d'usinage, un itinéraire de protection, un itinéraire de rétablissement prédéterminé.

9. Procédé selon la revendication 1, dans lequel le rapport de segment comprend l'imbrication de segments, le chevauchement de segments, la connexion de segments, l'isolation de segments.

10. Appareil de traitement d'un niveau de contrôle de connexion en tandem, TCM, **caractérisé en ce qu'**il comprend : un module d'obtention d'itinéraire de service, un module de détermination de segment de TCM et un module d'attribution de niveau de TCM,
le module d'obtention d'itinéraire de service étant configuré pour obtenir l'itinéraire d'un service qui doit être TCM configuré ;
le module de détermination de segment TCM étant configuré pour obtenir des segments de TCM sur l'itinéraire du service et déterminer un segment de TCM qui doit être configuré à partir des segments de TCM obtenus, un segment de TCM étant un segment, comprenant un point de départ et un point terminal, entre deux noeuds de service sur l'itinéraire du service ; et
le module d'attribution de niveau de TCM est configuré pour attribuer un niveau de TCM au segment de TCM qui doit être configuré en fonction d'un rapport de segment entre le segment de TCM qui doit être configuré et un segment de TCM configuré, le segment de TCM configuré étant un segment de TCM pour lequel un niveau de TCM est configuré et le segment de TCM qui doit être configuré est un segment de TCM pour lequel un niveau de TCM n'est pas configuré.

11. Appareil selon la revendication 10, comprenant en outre : un module de stockage configuré pour enregistrer une plage attribuable de chaque segment de TCM.

12. Appareil selon la revendication 10, comprenant en outre : un module d'évaluation configuré pour estimer si tous les itinéraires sont traités et déterminer si un itinéraire de protection existe.

13. Appareil selon la revendication 10, 11 ou 12, comprenant en outre : un module d'ajustement de niveau de TCM configuré pour ajuster une plage attribuable du niveau de TCM du segment de TCM correspondant en fonction d'une intersection d'une plage attribuable d'un niveau de TCM d'un trajet d'usinage et d'une plage attribuable d'un niveau de TCM d'un itinéraire de protection lorsque le service présente un trajet d'usinage et l'itinéraire de protection.

14. Procédé selon la revendication 10, dans lequel l'itinéraire du service comprend un trajet d'usinage, un itinéraire de protection, un itinéraire de rétablissement prédéterminé.

15. Procédé selon la revendication 10, dans lequel le rapport de segment comprend une imbrication de segments, un chevauchement de segments, une connexion de segments et une isolation de segments.
